# EUROPEAN PATENT SPECIFICATION

(11) **EP 1 886 493 B1**
(45) Date of publication and mention of the grant of the patent: **18.05.2011**
(21) Application number: 06768695.6
(22) Date of filing: 30.05.2006
(51) Int. Cl.: H04N 5/91, H04N 5/765, H04N 5/00, H04N 5/445, H04N 9/82, H04N 5/76

(54) **METHOD AND APPARATUS FOR STORING BROADCAST PROGRAM**
VERFAHREN UND VORRICHTUNG ZUR SPEICHERUNG VON RUNDFUNKSENDUNGEN
PROCEDE ET APPAREIL PERMETTANT DE STOCKER UN PROGRAMME DE DIFFUSION

(30) Priority: 31.05.2005 US 685413 P; 17.06.2005 KR 20050052545
(43) Date of publication of application: 13.02.2008
(73) Proprietor: Samsung Electronics Co., Ltd., Gyeonggi-do 442-742 (KR)
(72) Inventor: AHN, Jin-Yong, Suwon-si, Gyeonggi-do 443-801 (KR); BAE, Soo-Kang, 414, Sienne Officetel, Seongnam-si, Gyeonggi-do 463-821 (KR); KANG, Jung-Min, 107-803 Dongbu Centreville Apt., Seoul 136-783 (KR); KIM, Du-Il, 108-1403 Dongsuwon LG Village, Suwon-si, Gyeonggi-do 443-706 (KR)
(74) Representative: Brandon, Paul Laurence
(86) International application number: PCT/KR2006/002067
(87) International publication number: WO 2006/129949

(56) References cited:
- EP-A1- 1 330 121
- WO-A2-02/19691
- WO-A2-02/32139
- US-A- 5 963 264
- US-A1- 2002 184 625
- US-A1- 2002 186 296

## Description

### Technical Field

The present invention relates to a method and apparatus for storing a broadcast program, and more particularly, to a method and apparatus for storing a broadcast program in which a broadcast program is stored with reference to electronic program guide (EPG) information and application information which are transmitted together with an audio/video signal.

### Background Art

In recent years, digital broadcast receivers including storage media with a large storage capacity (e.g., hard discs) have been developed and commercialized. Digital broadcast receivers receive broadcast programs chosen by users and store the received broadcast programs in their own storage media. Digital broadcast receivers are expected to completely replace conventional video cassette recorders (VCRs) when digital broadcasting becomes more widespread in the next few years.

However, conventional digital broadcast receivers can store only audio/video (A/V) signals using electronic program guide (EPG) information. Even when broadcast programs include application information regarding A/V signals, conventional digital broadcast receivers can store only the A/V signals. Thus, when watching stored broadcast programs that have been previously broadcast, users may not be provided with all of the services that are provided if they had watched the broadcast programs as the programs were broadcast.

In order to solve the above problem with conventional digital broadcast receivers, a method of storing an entire broadcast program transport stream may be used. According to this method, however, unnecessary A/V signals that users do not wish to receive and EPG information regarding the unnecessary A/V signals may be stored. In addition, according to this method, all application information that is repeatedly transmitted by a broadcasting station may be stored regardless of whether it is duplicate application information, thereby causing a shortage of storage capacity. Moreover, according to this method, a broadcast program transport stream must be reconstructed based on AN signals, application information, and EPG information, which is separated therefrom in order to use a corresponding broadcast program with other broadcast programs stored in advance.

WO02/32139 discusses systems and methods for supplementing on-demand media. The appended claims have been characterised over this document. WO02/1969 discusses an EPG subsystem for receiving and processing EPG from a set-top box.

### Disclosure of Invention

### Technical Solution

The present invention provides a method and apparatus for storing a broadcast program in a digital broadcast reception environment in which an audio/video signal, application information and electronic program guide (EPG) information, which are included in a broadcast program, are stored in conjunction with one another.

The present invention also provides a method and apparatus for storing a broadcast program in a digital broadcast reception environment in which an audio/video signal, application information and electronic program guide (EPG) information, which are included in a broadcast program, are appropriately processed and then stored as a file.

### Advantageous Effects

In the method and apparatus for storing a broadcast program according to exemplary embodiments of the present invention, if there is application information related to A/V signals included in a broadcast program, the application information is stored together with the broadcast program. Thus, even when watching a stored broadcast program, a user can be provided with all of the services that are provided when watching a program as it is broadcast.

In addition, according to exemplary embodiments of the present invention it is possible to store a broadcast program on storage media with a small storage capacity by deleting unnecessary A/V signals that the user does not wish to receive, EPG information corresponding to the unnecessary A/V signals, and duplicate application information.

Moreover, it is possible for the user to use a broadcast program with other broadcast programs that have been previously stored by storing the broadcast program as an XML file or a metadata file. Furthermore, there is no need to perform additional processes, such as the separation of an A/V file, an application file, and an EPG file from a broadcast program signal and then the reconstructing of the broadcast program signal based on the separated data.

### Description of Drawings

The above and other features and advantages of the present invention will become more apparent by describing in detail exemplary embodiments thereof with reference to the attached drawings in which:

FIG. 1 is a block diagram of an apparatus for storing a broadcast program according to an exemplary embodiment of the present invention;

FIG. 2 is a flowchart illustrating a method of storing a broadcast program according to an exemplary embodiment of the present invention;

FIG. 3 is a detailed flowchart illustrating operation S200 of FIG. 2 according to an exemplary embodiment of the present invention;

FIG. 4 is a detailed flowchart illustrating operation S220 of FIG. 3 according to an exemplary embodiment of the present invention;

FIG. 5 is a detailed flowchart illustrating operation S240 of FIG. 3 according to an exemplary embodiment of the present invention;

FIG. 6 is a detailed flowchart illustrating operation S260 of FIG. 3 according to an exemplary embodiment of the present invention; and

FIG. 7 is a flowchart illustrating a method of storing a broadcast program according to another exemplary embodiment of the present invention.

### Best Mode

According to an aspect of the present invention, there is provided an apparatus for storing a broadcast program according to the appended claim 1 to 12.

According to another aspect of the present invention, there is provided an apparatus for storing a broadcast program according to the appended claims 13 to 15.

According to another aspect of the present invention, there is provided a method of storing a broadcast program according to the appended claims 16 to 27.

According to another aspect of the present invention, there is provided a method of storing a broadcast program according to the appended claims 28 to 30.

According to another aspect of the present invention, there is provided a computer-readable recording medium storing a computer program for executing a method of storing a broadcast program according to the appended claim 31.

### Mode for Invention

The present invention will now be described more fully with reference to the accompanying drawings in which exemplary embodiments of the invention are shown.

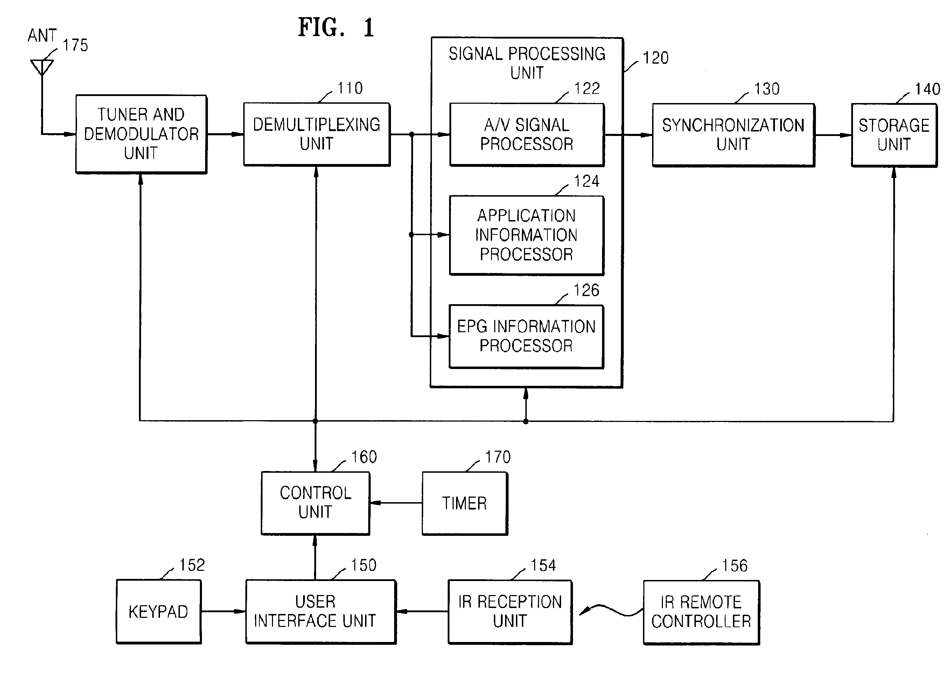

FIG. 1 is a block diagram of an apparatus for storing a broadcast program according to an exemplary embodiment of the present invention. Referring to FIG. 1, the apparatus includes a tuner and demodulator unit 100, a demultiplexing unit 110, a signal processing unit 120, a synchronization unit 130, a storage unit 140, a user interface unit 150, and a control unit 160. The signal processing unit 120 includes an audio/video signal processor 122, an application information processor 124, and an electronic program guide (EPG) information processor 126.

The apparatus receives a broadcast program transport stream encoded according to predetermined broadcast program standards. A plurality of transport streams generated by a plurality of broadcasting stations are multiplexed into the broadcast program transport stream, and the broadcast program transport stream is received by the apparatus via a single bandwidth channel. The broadcast program includes A/V signals produced by the broadcasting stations, application information regarding application programs providing various additional services to a user, and EPG information helping the user to choose a broadcast program that the user wishes to watch. The application information and the EPG information are located in a predetermined portion of a data stream.

The tuner and demodulator unit 100 receives a broadcast program transport stream via an antenna (ANT) 175 under the control of the control unit 160, demodulates the broadcast program transport stream, and transmits the demodulated data to the demultiplexing unit 110.

The demultiplexing unit 110 demultiplexes the demodulated data transmitted by the tuner and demodulator unit 100 into A/V signals, application information and EPG information. The demultiplexing unit 110 then transmits the A/V signals, the application information, and the EPG information to the A/V signal processor 122, the application information processor 124, and the EPG information processor 126, respectively, which are included in the signal processing unit 120.

The A/V signal processor 122 processes the A/V signals transmitted by the d emultiplexing unit 110, thereby forming an A/V file. In detail, the A/V signal processor 122 deletes some of the A/V signals that are determined by a user, with the aid of the user interface unit 150, as being signals which are not to be stored and packages the remaining undeleted A/V signals as an A/V file. Here, the generation of an A/V file includes generating an A/V file having a regular file format based on A/V signals which have a demultiplexed transport stream format and which are mapped according to predetermined broadcast program standards.

Alternatively, the A/V signal processor 122 may generate an A/V file by allowing the user to determine which of the A/V signals are to be stored with the aid of the user interface unit 150 and by packaging only the A/V signals chosen by the user, instead of allowing the user to determine which of the A/V signals are not to be stored, deleting the A/V signals determined by the user as being signals that are not to be stored, and by packaging the remaining undeleted A/V signals that are left undeleted.

The application information processor 124 processes the application information that is transmitted by the demultiplexing unit 110, thereby generating an application file. The generation of an application file includes generating an application file having a regular file format based on application information which has a demultiplexed transport stream format and which is mapped according to predetermined broadcast program standards.

The application information processor 124 generates an application file based on only the application information deemed to be necessary by the user with the aid of the user interface unit 150. In general, application information that is included in a broadcast program is repeatedly transmitted because it is almost impossible to determine when a user will watch or record the broadcast program. Therefore, the application information processor 124 deletes duplicate application information from the application information received from the demultiplexing unit 110, thereby preventing the same application information from being repeatedly stored. Therefore, it is possible to enhance storage efficiency by deleting duplicate application information. In addition, it is possible to increase the operating speed of the apparatus of FIG. 1 by preventing unnecessary storage processes from being repeatedly carried out.

The EPG information processor 126 processes the EPG information transmitted by the demultiplexing unit 110, thereby forming an EPG file. Here, the generation of an EPG file includes generating an EPG file having a regular file format based on EPG information which has a demultiplexed transport stream format and which is mapped according to predetermined broadcast program standards. The EPG file may be, for example, an Extensible Mark-up Language (XML) file or a metadata file (according to the Movie Picture Video (MPV) standard).

In detail, the EPG information processor 126 deletes unnecessary portions of the EPG information transmitted by the demultiplexing unit 110 and generates an EPG file using the remaining undeleted portions of the EPG information that is left undeleted. If there is additional information that needs to be added to the EPG information transmitted by the demultiplexing unit 110, the EPG information processor 126 processes the EPG information transmitted by the demultiplexing unit 110 so that the additional information can be added to a predetermined portion of the EPG information transmitted by the demultiplexing unit 110.

In addition, the EPG information processor 126 processes the EPG information transmitted by the demultiplexing unit 110 so that an invalidation flag for invalidating time information can be inserted into a time information-related portion of the EPG information transmitted by the demultiplexing unit 110. The invalidation flag prevents the user from being confused into thinking that the user is watching a broadcast program that is currently being broadcast while watching a playback of a previously recorded broadcast program. Here, unnecessary EPG information is EPG information regarding the A/V signals that have been determined by the user as being signals that are not to be stored. The user may deem unnecessary some of the A/V signals included in the broadcast program input to the apparatus of FIG. 1 by using the user interface unit 150. Then, the A/V signal processor 122 may delete the A/V signals that are deemed unnecessary by the user. The unnecessary EPG information has been described above as being related to the A/V signals that have been deemed unnecessary by the user with the aid of the user interface unit 150. However, the unnecessary EPG information may comprise EPG information deemed unnecessary according to preprogrammed information in the EPG information processor 126.

Examples of additional information that may be added to the predetermined portion of the EPG information transmitted by the demultiplexing unit 110 include storage time information, storage device information, and additional broadcast program description information generated by the user.

As one example of such additional information, storage information specifying where in the storage unit 140 a broadcast program is stored may be added to the predetermined portion of the EPG information transmitted by the demultiplexing unit 110.

Alternatively, as another example of additional information, additional broadcast program description information generated by the user may be added to the predetermined portion of the EPG information transmitted by the demultiplexing unit 110. The predetermined portion of the EPG information transmitted by the demultiplexing unit 110, to which the additional information can be added, may be part of the corresponding EPG information from which a portion deemed unnecessary has been deleted.

The synchronization unit 130 receives an A/V file, an application file, and an EPG file from the A/V signal processor 122, the application information processor 124, and the EPG information processor 126, respectively. Thereafter; the synchronization unit 130 synchronizes the A/V file, the application file, and the EPG file and may perform such synchronization with one another in one of two exemplary approaches outlined below.

In the first approach, the synchronization unit 130 may generate a synchronization file that synchronizes the A/V file, the application file, and the EPG file with one another. The synchronization file may be an XML file or a metadata file that correlates directories in which the A/V file, the application file, and the EPG file are to be respectively stored and/or correlates the names of the A/V file, the application file, and the EPG file.

In the second approach, the synchronization unit 130 may generate storage information for each of the A/V file and the application file and may convert the EPG file into an EPG file containing the storage information regarding the A/V file and the application file. Here, the storage information generated for the A/V file and the application file specifies the locations of directories in the storage unit 140 where the A/V file and the application file are to be stored and/or specifies the names of the A/V file and the application file. However, the synchronization unit 130 may synchronize the A/V file, the application file, and the EPG file with one another in an approach other than the exemplary first and second approaches set forth above. For example, the synchronization unit 130 may generate storage information regarding the A/V file and storage information regarding the application file, and may then convert one of the A/V file, the application file, and the EPG file into a converted file comprising the storage information regarding the A/V file and the storage information regarding the application file. The storage unit 140 may then store the converted file, comprising the storage information regarding the A/V file and the storage information regarding the application file, and may store remaining files among the A/V file, the application file, and the EPG file, which were not converted. Or, for example, the synchronization unit 130 may generate a storage information file comprising the storage information regarding the A/V file and the storage information regarding the application file, and the storage unit 140 may then store the A/V file, the application file, the EPG file and the storage information file.

The storage unit 140 may be, for example, an MPEG memory, a hard disc, an electrically erasable programmable read-only memory (EEPROM), a random access memory (RAM), or a read only memory (ROM).

The storage unit 140 may receive the A/V file, the application file, and the EPG file, and the synchronization file from the synchronization unit 130 and then store them. Alternatively, the storage unit 140 may receive the A/V file, the application file, and the EPG information containing the storage information regarding the A/V file and the application file from the synchronization unit 130 and then store them.

The user interface unit 150 is connected to the control unit 160 and provides an input/output interface that receives a command from the user that is required for controlling the apparatus of FIG. 1. In detail, the user interface unit 150 may comprise an infrared (IR) reception unit 154, which executes a command input via a keypad 152 or an IR remote controller 156. The IR remote controller 156 may be, for instance, a wireless mouse, such as an Air Mouse, or a typical remote controller.

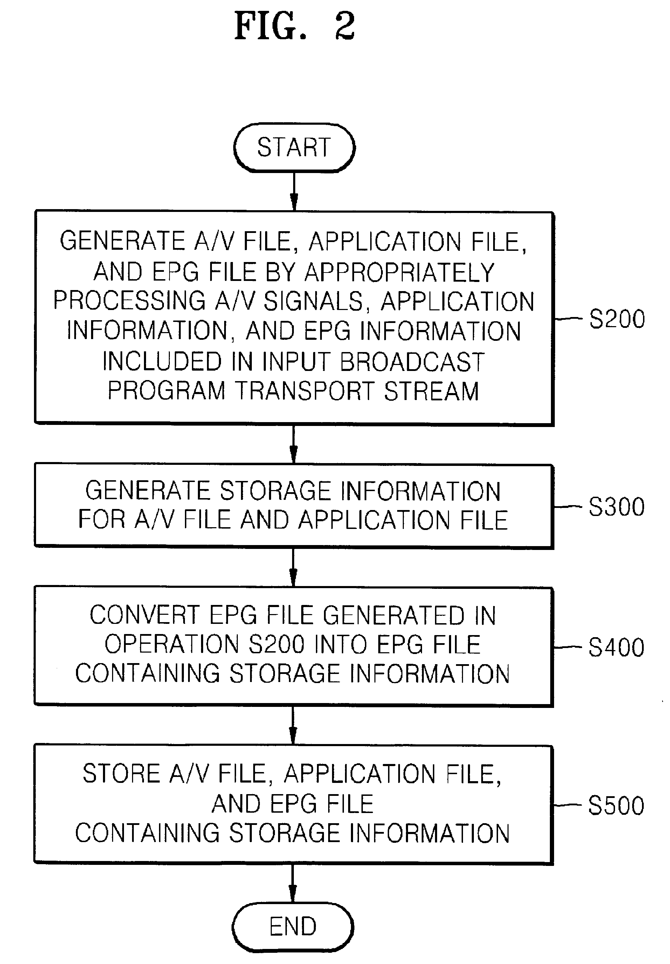

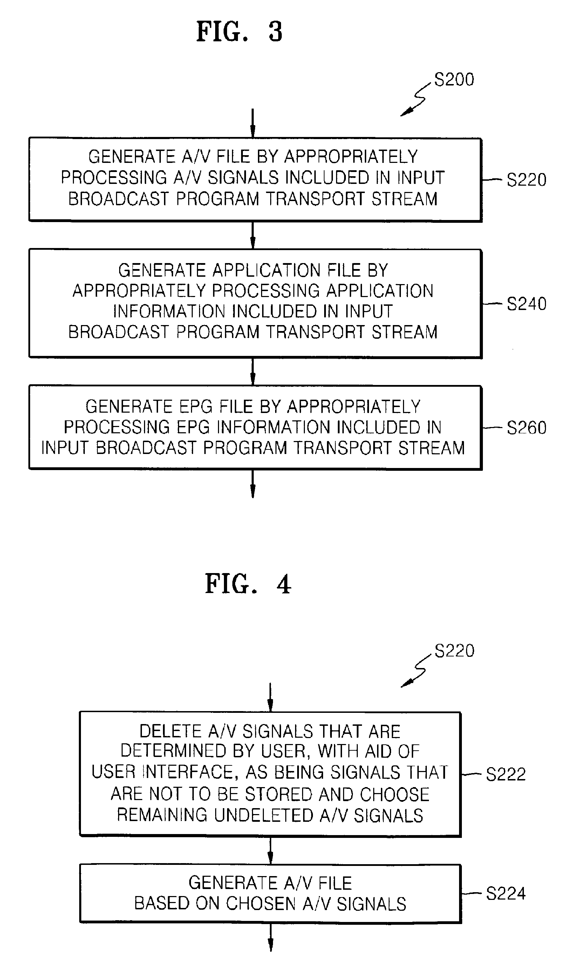

FIG. 2 is a flowchart illustrating a method of storing a broadcast program according to an exemplary embodiment of the present invention. Referring to FIG. 2, in operation S200, an A/V file is generated by appropriately processing a plurality of A/V signals which are demultiplexed from an input broadcast program transport stream and have a transport stream format, an application file is generated by appropriately processing application information which is also demultiplexed from the input broadcast program transport stream and has a transport stream format, and an EPG file is generated by appropriately processing EPG information which is also demultiplexed from the input broadcast program transport stream and has a transport stream format. Operation S200 will be described in further detail below with reference to FIG. 3.

In operation S300, storage information is generated for each of the A/V file and the application file. The storage information specifies the locations of directories in the storage unit 140 where the A/V file and the application file are to be stored or the names of the A/V file and the application file.

In operation S400, one of the A/V file, the application file, and the EPG file is converted into a converted file comprising the storage information generated in operation S300.

In operation S500, the converted file which was obtained in operation S400 and the remaining files among the A/V file, the application file, and the EPG file which were not converted are stored.

FIG. 3 is a detailed flowchart illustrating operation S200 of FIG. 2 according to an exemplary embodiment of the present invention. Referring to FIG. 3, in operation S220, an A/V file is generated by appropriately processing a plurality of A/V signals which are demultiplexed from an input broadcast program transport stream and have a transport stream format. In operation S240, an application file is generated by appropriately processing application information which is also demultiplexed from the input broadcast program transport stream and has a transport stream format. In operation S260, an EPG file is generated by appropriately processing EPG information which is also demultiplexed from the input broadcast program transport stream and has a transport stream format. Operations S220, S240, and S260 will be described in further detail below with reference to FIGS. 4, 5, and 6, respectively.

FIG. 4 is a detailed flowchart illustrating operation S220 of FIG. 3 according to an exemplary embodiment of the present invention. Referring to FIG. 4, in operation S222, some of a plurality of A/V signals included in an input broadcast program transport stream that are determined by a user with the aid of a user interface as being signals that are not to be stored are deleted, and the remaining undeleted A/V signals arc chosen.

In operation S224, an A/V file is generated by packaging the undeleted A/V signals. The generation of an A/V file may include generating an A/V file having a regular file format based on A/V signals which have a transport stream format and are mapped according to predetermined broadcast program standards. Alternatively, in operation S224, an A/V file may be generated by allowing the user to determine which of the A/V signals included in the input broadcast program transport stream are to be stored and packaging only the A/V signals determined by the user as being signals that are to be stored, instead of allowing the user to determine which of the A/V signals included in the input broadcast program transport stream are not to be stored, deleting the A/V signals that are determined by the user as being signals that are not to be stored, and packaging only the remaining undeleted A/V signals.

Operations S222 and S224 are illustrated in FIG. 4 as being sequentially carried out, but operation S222 is optional.

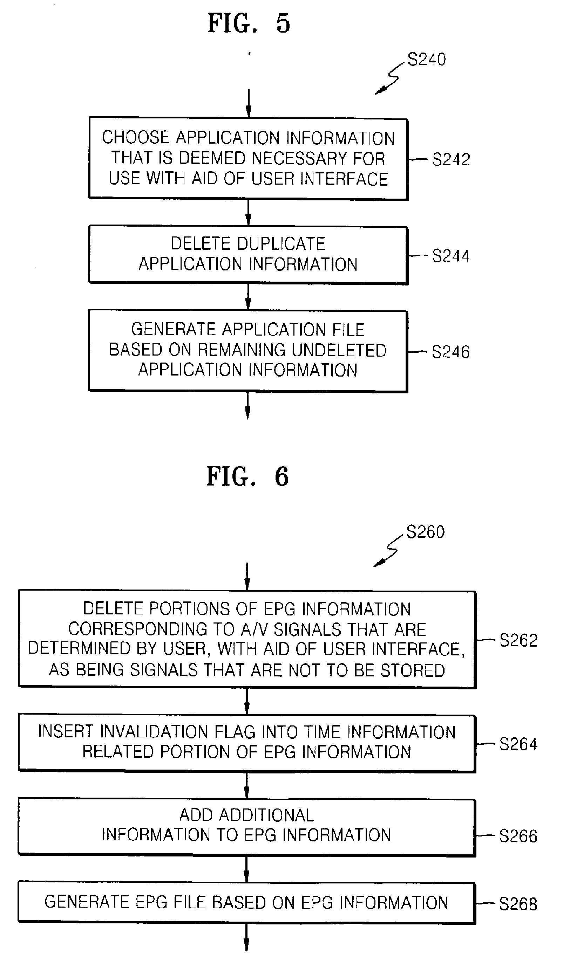

FIG. 5 is a detailed flowchart illustrating operation S240 of FIG. 3 according to an exemplary embodiment of the present invention. Referring to FIG. 5, in operation S242, only some application information included in an input broadcast program transport stream that is deemed necessary by a user with the aid of a user interface is chosen.

In operation S244, duplicate application information is deleted from the chosen application information. In general, application information included in a broadcast program is repeatedly transmitted because it is almost impossible to determine when the user will watch or record the broadcast program. Therefore, in operation S244, duplicate application information is deleted from the chosen application information, thereby preventing the same application information from being repeatedly stored.

In operation S246, an application file is generated using the remaining undeleted chosen application information. The generation of an application file includes generating an application file based on application information which has a transport stream format and is mapped according to predetermined broadcast program standards. Alternatively, in operation S246, an application file may be generated by allowing the user to determine which of the application information included in the input broadcast program transport stream is not to be stored, deleting the application information determined by the user as being information that is not to be stored, and packaging only the remaining undeleted application information, instead of allowing the user to determine which of the application information included in the input broadcast program transport stream is to be stored and packaging only the application information determined to be stored by the user.

Operations S242, S244, and S246 are illustrated in FIG. 5 as being sequentially carried out, but they may be carried out in a different order than the one set forth herein. In addition, operations S242 and S244 are optional.

FIG. 6 is a detailed flowchart illustrating operation S260 of FIG. 3 according to an exemplary embodiment of the present invention. Referring to FIG. 6, in operation S262, portions of EPG information included in an input broadcast program transport stream that correspond to A/V signals that have been determined by a user with the aid of a user interface as being signals that are not to be stored are deleted.

In operation S264, an invalidation flag is inserted into a portion of the EPG information related to time information, thereby preventing the user from being confused into thinking that the user is watching a real-time broadcast program while watching a playback of a previously recorded broadcast program.

In operation S266, additional information is added to the EPG information. Examples of such additional information include storage time information, storage device information, and additional broadcast program description information generated by the user.

In operation S268, an EPG file is generated using the EPG information. The generation of an EPG file includes generating an EPG file based on EPG information, which has a transport stream format and is mapped according to predetermined broadcast program standards.

Operations S262, S264, S266, and S268 are illustrated in FIG. 6 as being sequentially carried out, but they may be carried out in a different order than the one set forth herein. For example, operations S268 and S266 may be sequentially carried out so that an EPG file is generated and then additional information is added to the EPG file.

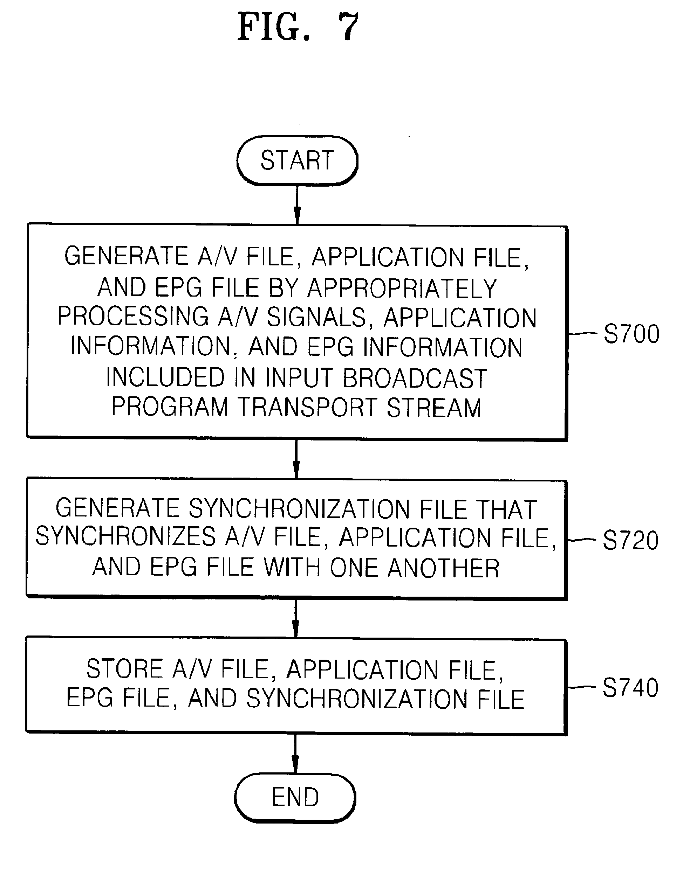

FIG. 7 is a flowchart illustrating a method of storing a broadcast program according to another exemplary embodiment of the present invention. Referring to FIG. 7, in operation S700, an A/V file is generated by appropriately processing a plurality of A/V signals, which are demultiplexed from an input broadcast program transport stream and have a transport stream format, an application file is generated by appropriately processing application information, which is also demultiplexed from the input broadcast program transport stream and has a transport stream format, and an EPG file is generated by appropriately processing EPG information, which is also demultiplexed from the input broadcast program transport stream and has a transport stream format.

In operation S720, a synchronization file that synchronizes the A/V file, the application file, and the EPG file is generated. The synchronization file may be an XML file or a metadata file that correlates the names of directories where the A/V file, the application file, and the EPG file are respectively stored or the respective names of the A/V file, the application file, and the EPG file.

In operation S740, the A/V file, the application file, the EPG file, and the synchronization file are stored.

The present invention can be realized as computer-readable code written on a computer-readable recording medium. The computer-readable recording medium may be any type of recording device in which data is stored in a computer-readable manner. Examples of the computer-readable recording medium include, but are not limited to, a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that a computer-readable code is written thereto and executed therefrom in a decentralized manner. Functional programs, code, and code segments needed for realizing the present invention can be easily understood by one of ordinary skill in the art.

As described above, in the method and apparatus for storing a broadcast program according to exemplary embodiments of the present invention, if there is application information related to A/V signals included in a broadcast program, the application information is stored together with the broadcast program. Thus, even when watching a stored broadcast program, a user can be provided with all of the services that are provided when watching a program as it is broadcast.

In addition, according to exemplary embodiments of the present invention it is poss ible to store a broadcast program on storage media with a small storage capacity by deleting unnecessary A/V signals that the user does not wish to receive, EPG information corresponding to the unnecessary A/V signals, and duplicate application information.

Moreover, it is possible for the user to use a broadcast program with other broadcast programs that have been previously stored by storing the broadcast program as an XML file or a metadata file. Furthermore, there is no need to perform additional processes, such as the separation of an A/V file, an application file, and an EPG file from a broadcast program signal and then the reconstructing of the broadcast program signal based on the separated data.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An apparatus for storing a broadcast program, the apparatus comprising:
a signal processing unit (120) which generates audio/video (A/V) data, application data and electronic program guide (EPG) data from a broadcast program transport stream in which a plurality of transport streams are multiplexed together;
a storage unit (140) which stores at least the A/V data relating to the broadcast program in an A/V file;
**characterised in that**:
the signal processing unit (120) is arranged to generate an audio/video (A/V) file, an application file, and a first electronic program guide (EPG) file related to the broadcast program by processing A/V signals, application information, and EPG information, respectively, which are included in the broadcast program transport stream;
a synchronization unit (130) is arranged to receive the A/V file, the application file, and the first EPG file from the signal processing unit (120), generate storage information for the A/V file and storage information for the application file, and convert the first EPG file into a second EPG file comprising the storage information for the AN file and the storage information for the application file; and
the storage unit (140) is arranged to store the AN file, the application file, and the second EPG file comprising the storage information for the A/V file and the storage information for the application file.

2. The apparatus of claim 1, wherein the storage information for the A/V file and the storage information for the application file comprise directory location information specifying directories where the AN file and the application file, respectively, are to be stored.

3. The apparatus of claim 1, wherein the storage information for the A/V file and the storage information for the application file comprise directory location information specifying directories where the AN file and the application file, respectively, are to be stored and comprise file name information specifying the names of the AN file and the application file, respectively.

4. The apparatus of claim 1, 2 or 3, wherein the second EPG file comprising the storage information for the A/V file and the storage information for the application file is an Extensible Mark-up Language (XML) file into which the first EPG file is converted.

5. The apparatus of claim 1, 2, or 3, wherein the second EPG file comprising the storage information for the AN file and the storage information for the application file comprises a metadata file into which the first EPG file is converted.

6. The apparatus of claim 1, wherein the signal processing unit (120) comprises:
an A/V signal processor (122) which generates the AN file by processing the A/V signals included in the broadcast program transport stream;
an application information processor (124) which generates the application file by processing the application information included in the broadcast program transport stream; and
an EPG information processor (126) which generates the first EPG file by processing the EPG information included in the broadcast program transport stream.

7. The apparatus of claim 6, wherein the A/V signal processor (122) processes the AN signals included in the broadcast program transport stream so that A/V signals that are determined by a user, with the aid of a user interface (150), as being signals that are not to be stored are deleted, and then generates the AN file based on remaining undeleted A/V signals.

8. The apparatus of claim 6, wherein the application information processor (124) processes the application information included in the broadcast program transport stream so that application information that is deemed necessary by a user, with the aid of a user interface (150), is chosen, and then generates the application file based on the chosen application information.

9. The apparatus of claim 6, wherein the application information processor (124) processes the application information included in the broadcast program transport stream so that duplicate application information is deleted and then generates the application file based on remaining undeleted application information.

10. The apparatus of claim 6, wherein the EPG information processor (126) processes the EPG information included in the broadcast program transport stream so that portions of the EPG information corresponding to AN signals that are determined by a user, with the aid of a user interface (150), as being signals that are not to be stored, are deleted, and then generates the first EPG file based on remaining portions of undeleted EPG information.

11. The apparatus of claim 6, wherein the EPG information processor (126) processes the EPG information included in the broadcast program transport stream so that an invalidation flag, which invalidates time information, is inserted into a portion of the EPG information related to time information, and generates the first EPG file based on the processed EPG information.

12. The apparatus of claim 6, wherein the EPG information processor (126) processes the EPG information included in the broadcast program transport stream so that additional information is added to the EPG information and generates the first EPG file based on the processed EPG information.

13. An apparatus for storing a broadcast program, the apparatus comprising:
a signal processing unit (120) which generates audio/video (AN) data, application data and electronic program guide (EPG) data from a broadcast program transport stream in which a plurality of transport streams are multiplexed together;
a storage unit (140) which stores at least the AN data relating to the broadcast program in an A/V file;
**characterised in that**:
the signal processing unit (120) is arranged to generate an audio/video (AN) file, an application file, and an electronic program guide (EPG) file by processing the A/V signals, application information, and EPG information, respectively, which are included in the broadcast program transport stream;
a synchronization unit (140) is arranged to generate a synchronization file that is used to synchronize the A/V file, the application file, and the EPG file; and
the storage unit is arranged to store the A/V file, the application file, the EPG file, and the synchronization file.

14. The apparatus of claim 13, wherein the synchronization file comprises an Extensible Mark-up Language (XML) file that correlates the A/V file, the application file, and the EPG file with one another.

15. The apparatus of claim 13, wherein the synchronization file comprises a metadata file that correlates the A/V file, the application file, and the EPG file with one another.

16. A method of storing a broadcast program, the method **characterised by**:
generating an A/V file, an application file, and a first EPG file by processing A/ V signals, application information, and EPG information, respectively, which are included in a broadcast program transport stream having a plurality of transport streams multiplexed together;
receiving the A/V file, the application file, and the first EPG file;
generating storage information for the A/V file and the application file;
converting the first EPG file into a second EPG file comprising the storage information for the AN file and the storage information for the application file; and
storing the A/V file, the application file, and the second EPG file comprising the storage information for the AN file and the storage information for the application file.

17. The method of claim 16, wherein, in the receiving of the A/V file, the application file, and the first EPG file, the storage information for the A/V file and the storage information for the application file comprise directory location information specifying directories where the A/V file and the application file, respectively, are to be stored.

18. The method of claim 16, wherein, in the receiving of the A/V file, the application file, and the first EPG file, the storage information for the A/V file and the storage information for the application file comprise directory location information specifying directories where the AN file and the application file, respectively, are to be stored, and file name information specifying the names of the A/V file and the application file, respectively.

19. The method of claim 16, 17 or 18 wherein the second EPG file comprising the storage information for the A/V file and the storage information for the application file comprises an Extensible Mark-up Language (XML) file into which the first EPG file is converted.

20. The method of claim 16, 17 or 18 wherein the second EPG file comprising the storage information for the AN file and the storage information for the application file comprises a metadata file into which the first EPG file is converted.

21. The method of any of claims 16 to 20, wherein the generation of the A/V file, the application file, and the first EPG file comprises:
generating the A/V file by processing the A/V signals included in the broadcast program transport stream;
generating the application file by processing the application information included in the broadcast program transport stream; and
generating the first EPG file by processing the EPG information included in the broadcast program transport stream.

22. The method of claim 21, wherein the generation of the A/V file comprises:
processing the A/V signals included in the broadcast program transport stream so that A/V signals that are determined by a user, with the aid of a user interface, as being signals that are not to be stored are deleted; and generating the A/V file based on remaining undeleted A/V signals.

23. The method of claim 21, wherein the generation of the application file comprises:
processing the application information included in the broadcast program transport stream so that application information that is deemed necessary by a user, with the aid of a user interface, is chosen; and
generating the application file based on the chosen application information.

24. The method of claim 21, wherein the generation of the application file comprises:
processing the application information included in the broadcast program transport stream so that duplicate application information is deleted; and
generating the application file based on remaining undeleted application information.

25. The method of claim 21, wherein the generation of the first EPG file comprises:
processing the EPG information included in the broadcast program transport stream so that portions of the EPG information corresponding to A/V signals that are determined by a user, with the aid of a user interface, as being signals that are not to be stored are deleted; and
generating the first EPG file based on remaining portions of undeleted EPG information.

26. The method of claim 21, wherein the generation of the first EPG file comprises:
processing the EPG information included in the broadcast program transport stream so that an invalidation flag, which invalidates time information, is inserted into a portion of the EPG information related to time information; and
generating the first EPG file based on the processed EPG information.

27. The method of claim 21, wherein the generation of the first EPG file comprises:
processing the EPG information included in the broadcast program transport stream so that additional information is added to the EPG information; and
generating the first EPG file based on the processed EPG information.

28. A method of storing a broadcast program, the method **characterised by**:
generating an A/V file, an application file, and an EPG file by processing AN signals, application information, and EPG information, respectively, which are included in an broadcast program transport stream having a multiplicity of transport streams multiplexed together generating a synchronization file that is used to synchronize the A/V file, the application file, and the EPG file; and storing the A/V file, the application file, the EPG file, and the synchronization file.

29. The method of claim 28, wherein the synchronization file comprises an Extensible Mark-up Language (XML) file that correlates the A/V file, the application file, and the EPG file with one another.

30. The method of claim 28, wherein the synchronization file comprises a metadata file that correlates the AN file, the application file, and the EPG file with one another.

31. A computer-readable recording medium storing a computer program for executing the method of any of claims 16 to 30.

## Patentansprüche

1. Vorrichtung zum Speichern eines ausgestrahlten Programms, wobei die Vorrichtung Folgendes umfasst:
eine Signalverarbeitungseinheit (120), die Audio/Video- bzw. A/V-Daten, Anwendungsdaten und Daten der elektronischen Programmzeitschrift bzw. EPG aus einem ausgestrahlten Programmtransportstrom erzeugt, in dem mehrere Transportströme miteinander gemultiplext sind;
eine Speicherungseinheit (140), die mindestens die A/V-Daten bezüglich des ausgestrahlten Programms in einer A/V-Datei speichert;
**dadurch gekennzeichnet, dass**
die Signalverarbeitungseinheit (120) dafür ausgelegt ist, eine Audio/Video- bzw. A/V-Datei, eine Anwendungsdatei und eine erste Datei der elektronischen Programmzeitschrift bzw. EPG bezüglich des ausgestrahlten Programms durch Verarbeiten von A/V-Signalen, Anwendungsinformationen bzw. EPG-Informationen, die in dem ausgestrahlten Programmtransportstrom enthalten sind, zu erzeugen;
eine Synchronisationseinheit (130) dafür ausgelegt ist, die A/V-Datei, die Anwendungsdatei und die erste EPG-Datei von der Signalverarbeitungseinheit (120) zu empfangen, Speicherungsinformationen für die A/V-Datei und Speicherungsinformationen für die Anwendungsdatei zu erzeugen und die erste EPG-Datei in eine zweite EPG-Datei umzusetzen, die die Speicherungsinformationen für die A/V-Datei und die Speicherungsinformationen für die Anwendungsdatei umfasst; und
die Speicherungseinheit (140) dafür ausgelegt ist, die A/V-Datei, die Anwendungsdatei und die zweite EPG-Datei, die die Speicherungsinformationen für die A/V-Datei und die Speicherungsinformationen für die Anwendungsdatei umfasst, zu speichern.

2. Vorrichtung nach Anspruch 1, wobei die Speicherungsinformationen für die A/V-Datei und die Speicherungsinformationen für die Anwendungsdatei Verzeichnisortsinformationen umfassen, die Verzeichnisse spezifizieren, in denen die A/V-Datei bzw. die Anwendungsdatei zu speichern sind.

3. Vorrichtung nach Anspruch 1, wobei die Speicherungsinformationen für die A/V-Datei und die Speicherungsinformationen für die Anwendungsdatei Verzeichnisortsinformationen umfassen, die Verzeichnisse spezifizieren, in denen die A/V-Datei bzw. die Anwendungsdatei zu speichern sind, und Dateinameninformationen umfassen, die die Namen der A/V-Datei bzw. der Anwendungsdatei spezifizieren.

4. Vorrichtung nach Anspruch 1, 2 oder 3, wobei die zweite EPG-Datei, die die Speicherungsinformationen für die A/V-Datei und die Speicherungsinformationen für die Anwendungsdatei umfasst, eine Datei in der Extensible Mark-up Language bzw. XML ist, in die die erste EPG-Datei umgesetzt wird.

5. Vorrichtung nach Anspruch 1, 2 oder 3, wobei die zweite EPG-Datei, die die Speicherungsinformationen für die A/V-Datei und die Speicherungsinformationen für die Anwendungsdatei umfasst, eine Metadaten-Datei umfasst, in die die erste EPG-Datei umgesetzt wird.

6. Vorrichtung nach Anspruch 1, wobei die Signalverarbeitungseinheit (120) Folgendes umfasst:
einen A/V-Signalprozessor (122), der die A/V-Datei durch Verarbeiten der in dem ausgestrahlten Programmtransportstrom enthaltenen A/V-Signale erzeugt;
einen Anwendungsinformationsprozessor (124), der die Anwendungsdatei durch Verarbeiten der in dem ausgestrahlten Programmtransportstrom enthaltenen Anwendungsinformationen erzeugt; und
einen EPG-Informationsprozessor (126), der die erste EPG-Datei durch Verarbeiten der in dem ausgestrahlten Programmtransportstrom enthaltenen EPG-Informationen erzeugt.

7. Vorrichtung nach Anspruch 6, wobei der A/V-Signalprozessor (122) die in dem ausgestrahlten Programmtransportstrom enthaltenen A/V-Signale so verarbeitet, dass A/V-Signale, die durch einen Benutzer mit Hilfe einer Benutzeroberfläche (150) als Signale bestimmt werden, die nicht zu speichern sind, gelöscht werden, und dann die A/V-Datei auf der Basis der verbleibenden ungelöschten A/V-Signale erzeugt.

8. Vorrichtung nach Anspruch 6, wobei der Anwendungsinformationsprozessor (124) die in dem ausgestrahlten Programmtransportstrom enthaltenen Anwendungsinformationen so verarbeitet, dass Anwendungsinformationen, die durch einen Benutzer mit Hilfe einer Benutzeroberfläche (150) als notwendig erachtet werden, ausgewählt werden, und dann die Anwendungsdatei auf der Basis der ausgewählten Anwendungsinformationen erzeugt.

9. Vorrichtung nach Anspruch 6, wobei der Anwendungsinformationsprozessor (124) die in dem ausgestrahlten Programmtransportstrom enthaltenen Anwendungsinformationen so verarbeitet, dass duplizierte Anwendungsinformationen gelöscht werden, und dann die Anwendungsdatei auf der Basis verbleibender ungelöschter Anwendungsinformationen erzeugt.

10. Vorrichtung nach Anspruch 6, wobei der EPG-Informationsprozessor (126) die in dem ausgestrahlten Programmtransportstrom enthaltenen EPG-Informationen so verarbeitet, dass Teile der EPG-Informationen, die A/V-Signalen entsprechen, die durch einen Benutzer mit Hilfe einer Benutzeroberfläche (150) als Signale bestimmt werden, die nicht zu speichern sind, gelöscht werden, und dann die erste EPG-Datei auf der Basis verbleibender Teile ungelöschter EPG-Informationen erzeugt.

11. Vorrichtung nach Anspruch 6, wobei der EPG-Informationsprozessor (126) die in dem ausgestrahlten Programmtransportstrom enthaltenen EPG-Informationen so verarbeitet, dass ein Invalidierungs-Flag, das Zeitinformationen invalidiert, in einen Teil der EPG-Informationen in Bezug auf Zeitinformationen eingefügt wird, und die erste EPG-Datei auf der Basis der verarbeiteten EPG-Informationen erzeugt.

12. Vorrichtung nach Anspruch 6, wobei der EPG-Informationsprozessor (126) die in dem ausgestrahlten Programmtransportstrom enthaltenen EPG-Informationen so verarbeitet, dass zusätzliche Informationen zu den EPG-Informationen hinzugefügt werden, und die erste EPG-Datei auf der Basis der verarbeiteten EPG-Informationen erzeugt.

13. Vorrichtung zum Speichern eines ausgestrahlten Programms, wobei die Vorrichtung Folgendes umfasst:
eine Signalverarbeitungseinheit (120), die Audio/Video- bzw. A/V-Daten, Anwendungsdaten und Daten der elektronischen Programmzeitschrift bzw. EPG aus einem ausgestrahlten Programmtransportstrom erzeugt, in dem mehrere Transportströme miteinander gemultiplext sind;
eine Speicherungseinheit (140), die mindestens die A/V-Daten bezüglich des ausgestrahlten Programms in einer A/V-Datei speichert;
**dadurch gekennzeichnet, dass**
die Signalverarbeitungseinheit (120) dafür ausgelegt ist, eine Audio/Video- bzw. A/V-Datei, eine Anwendungsdatei und eine Datei der elektronischen Programmzeitschrift bzw. EPG durch Verarbeiten der A/V-Signale, der Anwendungsinformationen bzw. der EPG-Informationen zu erzeugen, die in dem ausgestrahlten Programmtransportstrom enthalten sind;
eine Synchronisationseinheit (130) dafür ausgelegt ist,
eine Synchronisationsdatei zu erzeugen, die zum Synchronisieren der A/V-Datei, der Anwendungsdatei und der EPG-Datei verwendet wird; und
die Speicherungseinheit dafür ausgelegt ist, die A/V-Datei, die Anwendungsdatei, die EPG-Datei und die Synchronisationsdatei zu speichern.

14. Vorrichtung nach Anspruch 13, wobei die Synchronisationsdatei eine Datei in der Extensible Mark-up Language bzw. XML umfasst, die die A/V-Datei, die Anwendungsdatei und die EPG-Datei miteinander korreliert.

15. Vorrichtung nach Anspruch 13, wobei die Synchronisationsdatei eine Metadaten-Datei umfasst, die die A/V-Datei, die Anwendungsdatei und die EPG-Datei miteinander korreliert.

16. Verfahren zum Speichern eines ausgestrahlten Programms, **gekennzeichnet durch** die folgenden Schritte:
Erzeugen einer A/V-Datei, einer Anwendungsdatei und einer ersten EPG-Datei **durch** Verarbeiten von A/V-Signalen, von Anwendungsinformationen bzw. von EPG-Informationen, die in einem ausgestrahlten Programmtransportstrom enthalten sind, der mehrere miteinander gemultiplexte Transportströme aufweist;
Empfangen der A/V-Datei, der Anwendungsdatei und der ersten EPG-Datei;
Erzeugen von Speicherungsinformationen für die A/V-Datei und die Anwendungsdatei;
Umsetzen der ersten EPG-Datei in eine zweite EPG-Datei, die die Speicherungsinformationen für die A/V-Datei und die Speicherungsinformationen für die Anwendungsdatei umfasst; und
Speichern der A/V-Datei, der Anwendungsdatei und der zweiten EPG-Datei, die die Speicherungsinformationen für die A/V-Datei und die Speicherungsinformationen für die Anwendungsdatei umfasst.

17. Verfahren nach Anspruch 16, wobei beim Empfangen der A/V-Datei, der Anwendungsdatei und der ersten EPG-Datei die Speicherungsinformationen für die A/V-Datei und die Speicherungsinformationen für die Anwendungsdatei Verzeichnisortsinformationen umfassen, die Verzeichnisse spezifizieren, in denen die A/V-Datei bzw. die Anwendungsdatei zu speichern sind.

18. Verfahren nach Anspruch 16, wobei beim Empfangen der A/V-Datei, der Anwendungsdatei und der ersten EPG-Datei die Speicherungsinformationen für die A/V-Datei und die Speicherungsinformationen für die Anwendungsdatei Verzeichnisortsinformationen umfassen, die Verzeichnisse spezifizieren, in denen die A/V-Datei bzw. die Anwendungsdatei zu speichern sind, und Dateinameninformationen umfassen, die die Namen der A/V-Datei bzw. der Anwendungsdatei spezifizieren.

19. Verfahren nach Anspruch 16, 17 oder 18, wobei die zweite EPG-Datei, die die Speicherungsinformationen für die A/V-Datei und die Speicherungsinformationen für die Anwendungsdatei umfasst, eine Datei in der Extensible Mark-up Language bzw. XML umfasst, in die die erste EPG-Datei umgesetzt wird.

20. Verfahren nach Anspruch 16, 17 oder 18, wobei die zweite EPG-Datei, die die Speicherungsinformationen für die A/V-Datei und die Speicherungsinformationen für die Anwendungsdatei umfasst, eine Metadaten-Datei umfasst, in die die erste EPG-Datei umgesetzt wird.

21. Verfahren nach einem der Ansprüche 16 bis 20, wobei die Erzeugung der A/V-Datei, der Anwendungsdatei und der ersten EPG-Datei Folgendes umfasst:
Erzeugen der A/V-Datei durch Verarbeiten der in dem ausgestrahlten Programmtransportstrom enthaltenen A/V-Signale;
Erzeugen der Awendungsdatei durch Verarbeiten der in dem ausgestrahlten Programmtransportstrom enthaltenen Anwendungsinformationen; und
Erzeugen der ersten EPG-Datei durch Verarbeiten der in dem ausgestrahlten Programmtransportstrom enthaltenen EPG-Informationen.

22. Verfahren nach Anspruch 21, wobei die Erzeugung der A/V-Datei Folgendes umfasst:
Verarbeiten der in dem ausgestrahlten Programmtransportstrom enthaltenen A/V-Signale dergestalt, dass A/V-Signale, die durch einen Benutzer mit Hilfe einer Benutzeroberfläche als Signale bestimmt werden, die nicht zu speichern sind, gelöscht werden;
und Erzeugen der A/V-Datei auf der Basis verbleibender ungelöschter A/V-Signale.

23. Verfahren nach Anspruch 21, wobei die Erzeugung der Awendungsdatei Folgendes umfasst:
Verarbeiten der in dem ausgestrahlten Programmtransportstrom enthaltenen Anwendungsinformationen dergestalt, dass Anwendungsinformationen, die durch einen Benutzer mit Hilfe einer Benutzeroberfläche als notwendig erachtet werden, ausgewählt werden; und
Erzeugen der Anwendungsdatei auf der Basis der ausgewählten Anwendungsinformationen.

24. Verfahren nach Anspruch 21, wobei die Erzeugung der Anwendungsdatei Folgendes umfasst:
Verarbeiten der in dem ausgestrahlten Programmtransportstrom enthaltenen Anwendungsinformationen dergestalt, dass duplizierte Anwendungsinformationen gelöscht werden; und
Erzeugen der Anwendungsdatei auf der Basis verbleibender ungelöschter Anwendungsinformationen.

25. Verfahren nach Anspruch 21, wobei die Erzeugung der ersten EPG-Datei Folgendes umfasst:
Verarbeiten der in dem ausgestrahlten Programmtransportstrom enthaltenen EPG-Informationen dergestalt, dass Teile der EPG-Informationen, die A/V-Signalen entsprechen, die durch einen Benutzer mit Hilfe einer Benutzeroberfläche als Signale bestimmt werden, die nicht zu speichern sind, gelöscht werden; und
Erzeugen der ersten EPG-Datei auf der Basis verbleibender Teile ungelöschter EPG-Informationen.

26. Verfahren nach Anspruch 21, wobei die Erzeugung der ersten EPG-Datei Folgendes umfasst:
Verarbeiten der in dem ausgestrahlten Programmtransportstrom enthaltenen EPG-Informationen dergestalt, dass ein Invalidierungs-Flag, das Zeitinformationen invalidiert, in einen Teil der EPG-Informationen in Bezug auf Zeitinformationen eingefügt wird; und
Erzeugen der ersten EPG-Datei auf der Basis der verarbeiteten EPG-Informationen.

27. Verfahren nach Anspruch 21, wobei die Erzeugung der ersten EPG-Datei Folgendes umfasst:
Verarbeiten der in dem ausgestrahlten Programmtransportstrom enthaltenen EPG-Informationen dergestalt, dass zusätzliche Informationen zu den EPG-Informationen hinzugefügt werden; und
Erzeugen der ersten EPG-Datei auf der Basis der verarbeiteten EPG-Informationen.

28. Verfahren zum Speichern eines ausgestrahlten Programms, **gekennzeichnet durch** die folgenden Schritte:
Erzeugen einer A/V-Datei, einer Anwendungsdatei und
einer EPG-Datei **durch** Verarbeiten von A/V-Signalen, von Anwendungsinformationen bzw. von EPG-Informationen, die in einem ausgestrahlten Programmtransportstrom enthalten sind, der mehrere miteinander gemultiplexte Transportströme aufweist;
Erzeugen einer Synchronisationsdatei, die zum Synchronisieren der A/V-Datei, der Anwendungsdatei und der EPG-Datei verwendet wird; und Speichern der A/V-Datei, der Anwendungsdatei, der EPG-Datei und der Synchronisationsdatei.

29. Verfahren nach Anspruch 28, wobei die Synchronisationsdatei eine Datei in der Extensible Mark-up Language bzw. XML umfasst, die die A/V-Datei, die Anwendungsdatei und die EPG-Datei miteinander korreliert.

30. Verfahren nach Anspruch 28, wobei die Synchronisationsdatei eine Metadaten-Datei umfasst, die die A/V-Datei, die Anwendungsdatei und die EPG-Datei miteinander korreliert.

31. Computerlesbares Aufzeichnungsmedium, das ein Computerprogramm zum Ausführen des Verfahrens nach einem der Ansprüche 16 bis 30 speichert.

## Revendications

1. Appareil destiné à stocker un programme de diffusion, l'appareil comprenant:
une unité de traitement de signaux (120) qui génère des données audio/vidéo (A/V), des données d'applications et des données de guide électronique des programmes (EPG) à partir d'un flux de transport de programmes de diffusion dans lequel une pluralité de flux de transport sont multiplexés les uns avec les autres ;
une unité de stockage (140) qui stocke au moins les données A/V liées au programme de diffusion dans un fichier A/V,
**caractérisé en ce que**:
l'unité de traitement de signaux (120) est conçue pour générer un fichier audio/vidéo (A/V), un fichier d'applications et un premier fichier de guide électronique des programmes (EPG) lié au programme de diffusion en traitant respectivement des signaux A/V, des informations d'applications et des informations EPG qui sont contenues dans le flux de transport de programmes de diffusion ;
une unité de synchronisation (130) est conçue pour recevoir le fichier A/V, le fichier d'applications et
le premier fichier EPG de l'unité de traitement de signaux (120), générer des informations de stockage destinées au fichier A/V et des informations de stockage destinées au fichier d'applications, et convertir le premier fichier EPG en un second fichier EPG comprenant les informations de stockage destinées au fichier A/V et les informations de stockage destinées au fichier d'applications ; et
l'unité de stockage (140) est conçue pour stocker le fichier A/V, le fichier d'applications et le second fichier EPG comprenant les informations de stockage destinées au fichier A/V et les informations de stockage destinées au fichier d'applications.

2. Appareil selon la revendication 1, dans lequel les informations de stockage destinées au fichier A/V et les informations de stockage destinées au fichier d'applications comprennent des informations d'emplacement de répertoires spécifiant des répertoires dans lesquels doivent respectivement être stockés le fichier A/V et le fichier d'applications.

3. Appareil selon la revendication 1, dans lequel les informations de stockage destinées au fichier A/V et les informations de stockage destinées au fichier d'applications comprennent des informations d'emplacement de répertoires spécifiant les répertoires dans lesquels doivent respectivement être stockés le fichier A/V et le fichier d'applications et comprennent des informations de noms de fichiers spécifiant respectivement les noms du fichier A/V et du fichier d'applications.

4. Appareil selon la revendication 1, 2 ou 3, dans lequel le second fichier EPG comprenant les informations de stockage destinées au fichier A/V et les informations de stockage destinées au fichier d'applications est un fichier en langage de balisage extensible (XML pour Extensible Mark-up Language) en lequel est converti le premier fichier EPG.

5. Appareil selon la revendication 1, 2 ou 3, dans lequel le second fichier EPG comprenant les informations de stockage destinées au fichier A/V et les informations de stockage destinées au fichier d'applications comprend un fichier de métadonnées en lequel est converti le premier fichier EPG.

6. Appareil selon la revendication 1, dans lequel l'unité de traitement de signaux (120) comprend :
un processeur de signaux A/V (122) qui génère le fichier A/V en traitant les signaux A/V contenus dans le flux de transport de programmes de diffusion ;
un processeur d'informations d'applications (124) qui génère le fichier d'applications en traitant les informations d'applications contenues dans le flux de transport de programmes de diffusion ; et
un processeur d'informations EPG (126) qui génère le premier fichier EPG en traitant les informations EPG contenues dans le flux de transport de programmes de diffusion.

7. Appareil selon la revendication 6, dans lequel le processeur de signaux A/V (122) traite les signaux AV contenus dans le flux de transport de programmes de diffusion de telle manière que les signaux A/V dont un utilisateur détermine, avec l'aide d'une interface utilisateur (150), qu'il s'agit de signaux ne devant pas être stockés, soient effacés, puis génère le fichier A/V sur la base de signaux A/V non effacés restants.

8. Appareil selon la revendication 6, dans lequel le processeur d'informations d'applications (124) traite les informations d'applications contenues dans le flux de transport de programmes de diffusion de telle manière que les informations d'applications considérées comme nécessaires par un utilisateur, avec l'aide d'une interface utilisateur (150), soient choisies, puis génère le fichier d'applications sur la base des informations d'applications choisies.

9. Appareil selon la revendication 6, dans lequel le processeur d'informations d'applications (124) traite les informations d'applications contenues dans le flux de transport de programmes de diffusion afin que des informations d'applications en double soient effacées, puis génère le fichier d'applications sur la base des informations d'applications non effacées restantes.

10. Appareil selon la revendication 6, dans lequel le processeur d'informations EPG (126) traite les informations EPG contenues dans le flux de transport de programmes de diffusion afin que des parties des informations EPG correspondant à des signaux A/V dont un utilisateur détermine, avec l'aide d'une interface utilisateur (150), qu'il s'agit de signaux ne devant pas être stockés, soient effacées, puis génère le premier fichier EPG sur la base de parties restantes d'informations EPG non effacées.

11. Appareil selon la revendication 6, dans lequel le processeur d'informations EPG (126) traite les informations EPG contenues dans le flux de transport de programmes de diffusion afin qu'un drapeau d'invalidation, qui invalide des informations temporelles, soit inséré dans une partie des informations EPG liées à des informations temporelles, et génère le premier fichier EPG sur la base des informations EPG traitées.

12. Appareil selon la revendication 6, dans lequel le processeur d'informations EPG (126) traite les informations EPG contenues dans le flux de transport de programmes de diffusion afin que des informations supplémentaires soient ajoutées aux informations EPG et génère le premier fichier EPG sur la base des informations EPG traitées.

13. Appareil destiné à stocker un programme de diffusion, l'appareil comprenant :
une unité de traitement de signaux (120) qui génère des données audio/vidéo (A/V), des données d'applications et des données de guide électronique des programmes (EPG) à partir d'un flux de transport de programmes de diffusion dans lequel une pluralité de flux de transport sont multiplexés les uns avec les autres ;
une unité de stockage (140) qui stocke au moins les données A/V liées au programme de diffusion dans un fichier A/V,
**caractérisé en ce que**:
l'unité de traitement de signaux (120) est conçue pour générer un fichier audio/vidéo (A/V), un fichier d'applications et un fichier de guide électronique des programmes (EPG) en traitant respectivement les signaux A/V, les informations d'applications et les informations EPG qui sont contenues dans le flux de transport de programmes de diffusion ;
une unité de synchronisation (130) est conçue pour générer un fichier de synchronisation qui est utilisé pour synchroniser le fichier A/V, le fichier d'applications et le fichier EPG ; et
l'unité de stockage est conçue pour stocker le fichier A/V, le fichier d'applications, le fichier EPG et le fichier de synchronisation.

14. Appareil selon la revendication 13, dans lequel le fichier de synchronisation comprend un fichier en langage de balisage extensible (XML) qui corrèle les uns avec les autres le fichier A/V, le fichier d'applications et le fichier EPG.

15. Appareil selon la revendication 13, dans lequel le fichier de synchronisation comprend un fichier de métadonnées qui corrèle les uns avec les autres le fichier A/V, le fichier d'applications et le fichier EPG.

16. Procédé de stockage d'un programme de diffusion, le procédé étant **caractérisé par** le fait de :
générer un fichier A/V, un fichier d'applications et un premier fichier EPG en traitant respectivement des signaux A/V, des informations d'applications et des informations EPG qui sont contenues dans un flux de transport de programmes de diffusion ayant une pluralité de flux de transport multiplexés les uns avec les autres ;
recevoir le fichier A/V, le fichier d'applications et le premier fichier EPG ;
générer des informations de stockage destinées au fichier A/V et au fichier d'applications ;
convertir le premier fichier EPG en un second fichier EPG comprenant les informations de stockage destinées au fichier A/V et les informations de stockage destinées au fichier d'applications ; et
stocker le fichier A/V, le fichier d'applications et le second fichier EPG comprenant les informations de stockage destinées au fichier A/V et les informations de stockage destinées au fichier d'applications.

17. Procédé selon la revendication 16, dans lequel, lors de la réception du fichier A/V, du fichier d'applications et du premier fichier EPG, les informations de stockage destinées au fichier A/V et les informations de stockage destinées au fichier d'applications comprennent des informations d'emplacement de répertoires spécifiant des répertoires dans lesquels doivent respectivement être stockés le fichier A/V et le fichier d'applications.

18. Procédé selon la revendication 16, dans lequel, lors de la réception du fichier A/V, du fichier d'applications et du premier fichier EPG, les informations de stockage destinées au fichier A/V et les informations de stockage destinées au fichier d'applications comprennent des informations d'emplacement de répertoires spécifiant des répertoires dans lesquels doivent respectivement être stockés le fichier A/V et le fichier d'applications, et des informations de noms de fichiers spécifiant respectivement les noms du fichier A/V et du fichier d'applications.

19. Procédé selon la revendication 16, 17 ou 18, dans lequel le second fichier EPG comprenant les informations de stockage destinées au fichier A/V et les informations de stockage destinées au fichier d'applications comprend un fichier en langage de balisage extensible (XML) en lequel est converti le premier fichier EPG.

20. Procédé selon la revendication 16, 17 ou 18, dans lequel le second fichier EPG comprenant les informations de stockage destinées au fichier A/V et les informations de stockage destinées au fichier d'applications comprend un fichier de métadonnées en lequel est converti le premier fichier EPG.

21. Procédé selon l'une quelconque des revendications 16 à 20, dans lequel la production du fichier A/V, du fichier d'applications et du premier fichier EPG consiste à :
générer le fichier A/V en traitant les signaux A/V contenus dans le flux de transport de programmes de diffusion ;
générer le fichier d'applications en traitant les informations d'applications contenues dans le flux de transport de programmes de diffusion ; et
générer le premier fichier EPG en traitant les informations EPG contenues dans le flux de transport de programmes de diffusion.

22. Procédé selon la revendication 21, dans lequel la production du fichier A/V consiste à :
traiter les signaux A/V contenus dans le flux de transport de programmes de diffusion afin d'effacer des signaux A/V dont un utilisateur détermine, avec l'aide d'une interface utilisateur, qu'il s'agit de signaux ne devant pas être stockés ; et générer le fichier A/V sur la base des signaux A/V non effacés restants.

23. Procédé selon la revendication 21, dans lequel la production du fichier d'applications consiste à :
traiter les informations d'applications contenues dans le flux de transport de programmes de diffusion de telle manière que les informations d'applications considérées comme nécessaires par un utilisateur, avec l'aide d'une interface utilisateur, soient choisies ; et
générer le fichier d'applications sur la base des informations d'applications choisies.

24. Procédé selon la revendication 21, dans lequel la production du fichier d'applications consiste à :
traiter les informations d'applications contenues dans le flux de transport de programmes de diffusion afin d'effacer des informations d'applications en double ; et
générer le fichier d'applications sur la base des informations d'applications non effacées restantes.

25. Procédé selon la revendication 21, dans lequel la production du premier fichier EPG consiste à :
traiter les informations EPG contenues dans le flux de transport de programmes de diffusion afin d'effacer des parties des informations EPG correspondant à des signaux A/V dont un utilisateur détermine, avec l'aide d'une interface utilisateur, qu'il s'agit de signaux ne devant pas être stockés ; et
générer le premier fichier EPG sur la base de parties restantes d'informations EPG non effacées.

26. Procédé selon la revendication 21, dans lequel la production du premier fichier EPG consiste à :
traiter les informations EPG contenues dans le flux de transport de programmes de diffusion afin qu'un drapeau d'invalidation, qui invalide des informations temporelles, soit inséré dans une partie des informations EPG liées à des informations temporelles ;
et générer le premier fichier EPG sur la base des informations EPG traitées.

27. Procédé selon la revendication 21, dans lequel la production du premier fichier EPG consiste à :
traiter les informations EPG contenues dans le flux de transport de programmes de diffusion de manière à ajouter des informations supplémentaires aux informations EPG ; et
générer le premier fichier EPG sur la base des informations EPG traitées.

28. Procédé de stockage d'un programme de diffusion, le procédé étant **caractérisé par** le fait de :
générer un fichier A/V, un fichier d'applications et un fichier EPG en traitant respectivement des signaux A/V, des informations d'applications et des informations EPG qui sont contenues dans un flux de transport de programmes de diffusion ayant une multiplicité de flux de transport multiplexés les uns avec les autres ;
générer un fichier de synchronisation qui est utilisé pour synchroniser le fichier A/V, le fichier d'applications et le fichier EPG ; et stocker le fichier A/V, le fichier d'applications, le fichier EPG et le fichier de synchronisation.

29. Procédé selon la revendication 28, dans lequel le fichier de synchronisation comprend un fichier en langage de balisage extensible (XML) qui corrèle les uns aux autres le fichier A/V, le fichier d'applications et le fichier EPG.

30. Procédé selon la revendication 28, dans lequel le fichier de synchronisation comprend un fichier de métadonnées qui corrèle les uns aux autres le fichier A/V, le fichier d'applications et le fichier EPG.

31. Support d'enregistrement lisible par ordinateur stockant un programme informatique destiné à exécuter le procédé selon l'une quelconque des revendications 16 à 30.
